# EUROPEAN PATENT APPLICATION

(11) **EP 1 356 722 A1**
(43) Date of publication of application: **29.10.2003**
(21) Application number: 03252570.1
(22) Date of filing: 23.04.2003
(51) Int. Cl.: A01G 3/06, A01D 34/416

(54) **Trimmer**

(30) Priority: 26.04.2002 GB 0209644
(71) Applicant: Electrolux Outdoor Products, Newton Aycliffe, County Durham DL5 6UP (GB)
(72) Inventor: Keyton, Richard, Newton Aycliffe, County Durham DL5 7LL (GB)
(74) Representative: Pratt, David Martin

(57) **Abstract**

A vegetation trimmer comprises a cutter head (11) housing a cutter member, and first and second handles (14 and 17). The first handle (14) is fixed to the cutter head (11) by means of a connecting member (13). The second handle (17) is rotatably mounted with respect to the first handle (14).

## Description

This invention relates to a garden implement, and in particular to a vegetation trimmer of the kind used in gardens and parks to cut long grass growing close to objects such as trees, walls and the like where lawnmowers cannot reach. The invention also relates to a trimmer that can be used for edging a lawn.

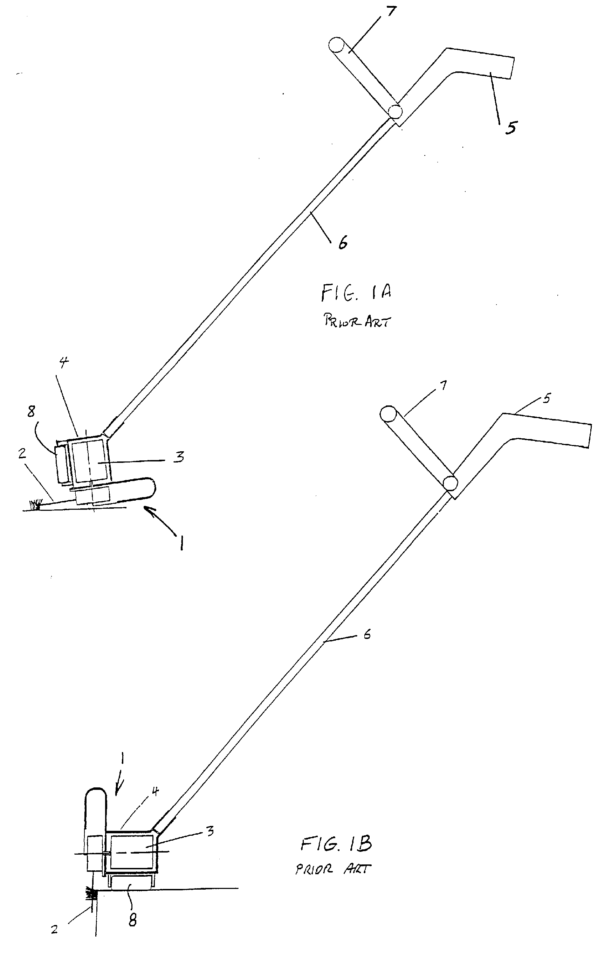

Various kinds of trimmer are known which are suited to different conditions and operations. For example, a known electrically-powered trimmer shown generally in Figures 1A and 1B, includes a cutter head 1 that is movable from a first (trimming) position (see Figure 1A), in which a flexible cutter line 2 is rotatable at high speed by a motor 3 in a generally horizontal plane, into a second (edging) position (see Figure 1B) in which the cutter line 2 is rotated in a generally vertical plane so that the edge of a lawn may be trimmed. The motor 3 is mounted in a housing 4, and the operator grasps a handle 5 which is connected to the housing via a rigid connecting member 6. An additional support handle 7 is also included to enable an operator to have good control. The handle 5, the connecting member 6 and the additional handle 7 are angularly displaceable with respect to the cutter head 1 by 180° about its longitudinal axis, so that the handles 5, 7 may be correctly positioned for cutting the edge of the lawn or for trimming. A roller 8, having an axis of rotation generally parallel with the axis of rotation of the cutter line 2, is also included for easy movement of the device along the ground during edging.

This trimmer, in common with many other known trimmers, is somewhat clumsy in the way the inclining takes place, and involves placing some part of the operator's body near the cutter line 2 (which could still be rotating) during the change-over between trimming and edging operations. Moreover, although this type of trimmer is relatively easy to operate in the trimming mode, its handles are positioned too low in the edging mode, thus making it uncomfortable to operate in that mode. This is because, in the edging mode, the user finds operation more comfortable if he can position his head generally above the line of action of the cutter line, thereby facilitating his view of the edging operation. This requires the centre line of the trimmer to make a larger angle with respect to the horizontal than when the trimmer is in the trimming mode, and hence requires the handles to be higher in the edging mode than in the trimming mode.

The present invention provides a vegetation trimmer comprising a cutter head housing cutter means, and first and second handles, the first handle being fixed to the cutter head by means of a connecting member, and the second handle being rotatably mounted with respect to the first handle, whereby the cutter head is movable between a first operating position (trimming mode) in which the cutter means is substantially horizontal and a second operating position (edging mode) in which the cutter means is substantially vertical.

In a preferred embodiment, the cutter head defines a support surface on which the trimmer is supported in the edging mode, and the axis of rotation between the first and second handles substantially passes through the intersection of said surface and the plane of action of the cutter means. In this case, the trimmer may further comprise a roller fixed to the cutter head for rotatably supporting the cutter head when the trimmer is in the edging mode, that surface of the roller contacting the ground during edging constituting the support surface.

Advantageously, the trimmer further comprises retaining means for retaining the first and second handles in the relative configurations corresponding to the first and second operating positions.

Preferably, the connecting member is fixed to the first handle by means of a journal, and the second handle is fixed to a bearing sleeve which surrounds the journal for rotation relative thereto.

Advantageously, the journal is substantially cylindrical, and the bearing sleeve is a substantially hollow cylindrical bearing sleeve.

In this case, the retaining means comprises interengageable detent and socket means on the journal and the bearing sleeve.

Preferably, the cutter head further comprises a motor housing integrally formed therewith and a motor is mounted within the motor housing, the motor being in drivable engagement with the cutter means, and the motor housing adjoins the connecting member.

Advantageously, the cutter means is rotatable relative to the cutter head, and the motor is in rotatable drivable engagement with the cutter means.

Conveniently, the cutter head, the motor housing, the connecting member, the journal and the first handle are of clam shell construction, and are made of a plastics material such as ABS or polypropylene.

In a preferred embodiment, the axis of the motor lies at a predetermined angle to the centre line of the trimmer. Advantageously, said predetermined angle lies in the range of from substantially 35° to 55°, and preferably is substantially 48.8°.

In a preferred embodiment, the motor is an electric motor, and a switch for actuating the motor is provided within the first handle. Advantageously, the trimmer further comprises trigger means for actuating the motor switch, the trigger means having first and second hand-engageable switch actuation portions. Preferably, the trigger means is constituted by an elongate lever, the first and second actuation portions being positioned at opposite end portions of the lever. Conveniently, the first handle has a generally D-shaped, hand-engageable portion, the motor switch is mounted within the curved part of the D-shaped portion, and the trigger means is positioned to extend along the interior of the curved part of the D-shaped portion.

The centre line of the first handle may lie at a predetermined angle to the centre line of the trimmer. Preferably, said predetermined angle is substantially 0.4°.

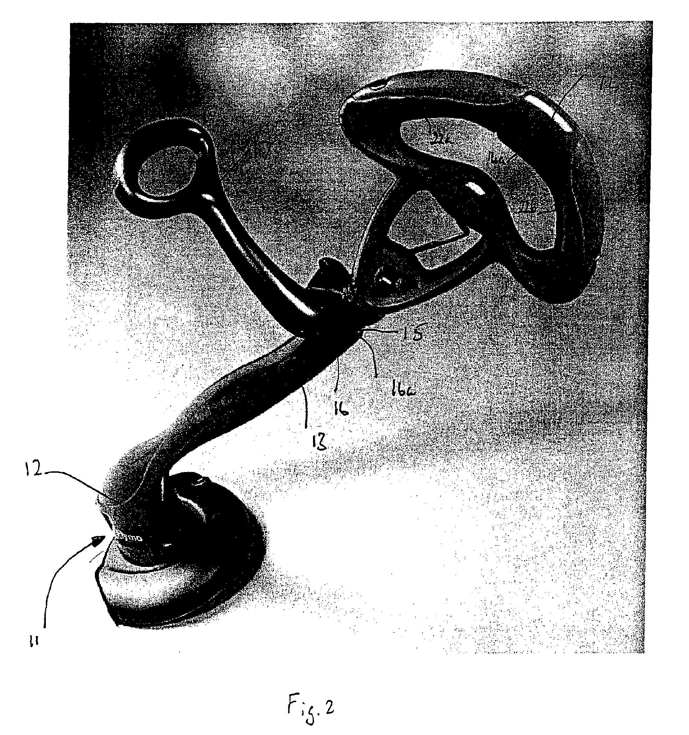

A trimmer constructed in accordance with the invention will now be described, by way of example, in greater detail, with reference to Figures 2 to 4 of the drawings, in which:-
Figure 2 is a perspective view of the trimmer;
Figure 3 is a side elevation of the trimmer in a first operating position; and
Figure 4 is a side elevation of the trimmer in a second operating position.

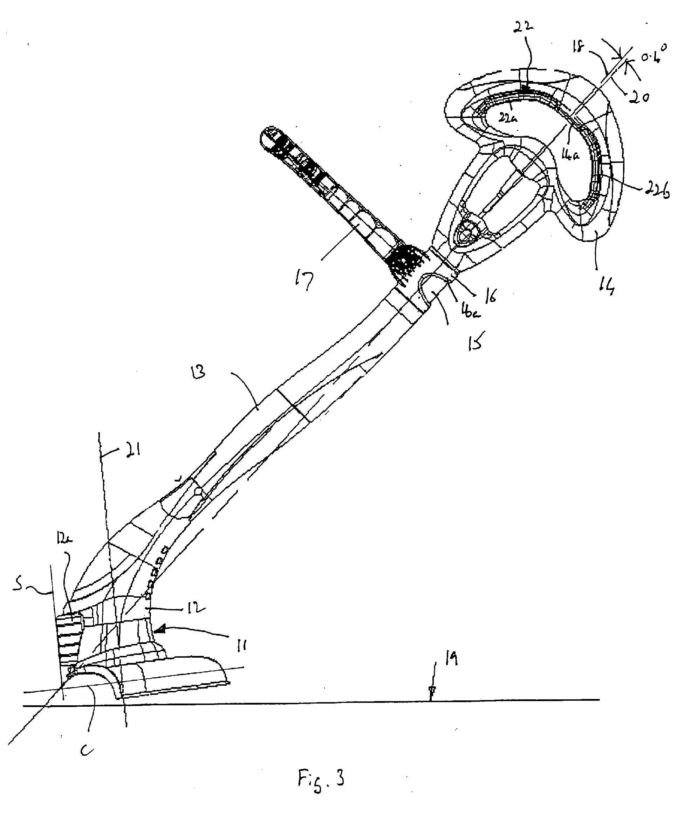

Referring to the drawings, a trimmer includes a cutter head 11 in which a cutter line (not shown) is rotated by an electric motor (not shown) housed within a motor housing 12. The cutter line is a flexible line, typically made of nylon, so that, when it comes into contact with a hard object such as a tree or a stone, the line will be deflected, and no damage will be caused to the object. Also, the momentum transferred to an object such as a stone will be insufficient to propel that object into the air, thereby reducing the risk of injury to the user or to anyone nearby. The cutter line is, however, rigid enough to cut any long grass which it strikes. The motor housing 12 is formed with a connecting member 13 which is rigidly connected to a first (main) handle 14 via a journal 15 (see Figure 3). The main handle 14, the connecting member 13, the motor housing 12 and the cutter head 11 are of clam shell construction, and are made of a plastics material such as ABS or polypropylene. The journal 15 is journalled in a generally cylindrical bearing sleeve 16 fixed to a second (steady) handle 17. The sleeve 16 is formed with a cut-away portion 16a. A roller 12a is mounted on the motor housing 12 with its axis of rotation generally parallel to the axis of rotation of the motor.

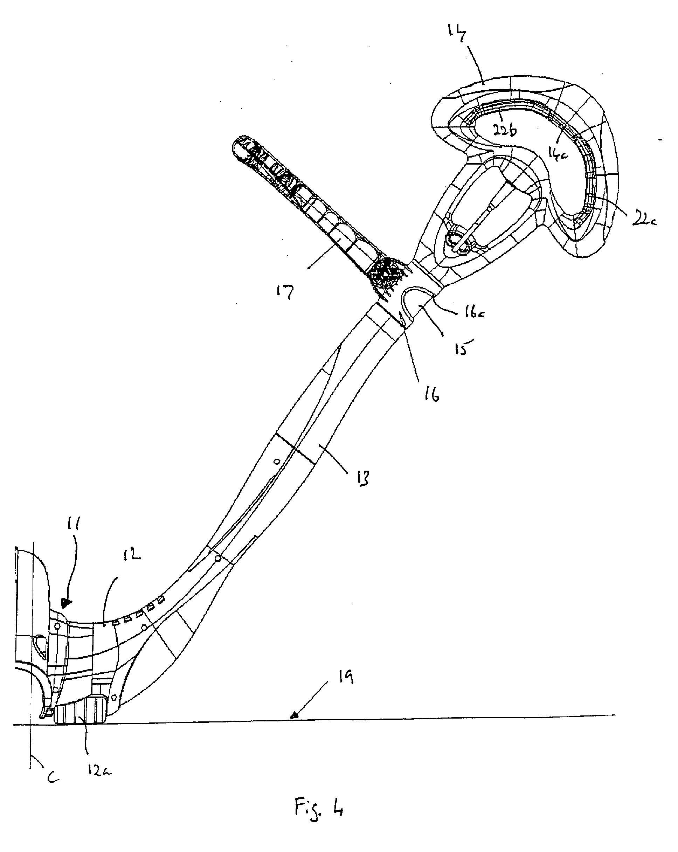

Figure 3 shows the trimmer with the cutter head 11 positioned for trimming. In this position, the cutter line rotates in a plane inclined at about 5° to the horizontal, thereby enabling the trimmer to cut long grass growing close to objects such as trees, walls and the like where lawnmowers cannot reach. In this inclined position, only the tip of the cutter line cuts grass, thereby minimising the load on the motor - if the cutter line rotated in a horizontal plane, it would cut grass substantially along its entire length, and this would lead to an increased load on the motor resulting possibly in the motor over-heating, particularly when cutting long, wet grass. In order to change the mode of operation of the trimmer from the trimming position shown in Figure 3 to the edging position shown in Figure 4, the user grips the steady handle 17 with one hand and rotates the main handle 14 through substantially 180° with the other hand.

In the edging position shown in Figure 4, the trimmer is movable along a lawn adjacent to an edge on the roller 12a. In this mode, the cutter line is rotatable generally in a vertical plane so that the edge of a lawn may be trimmed. Once the trimmer has been changed from one operating position to the other, the user can adjust the orientation of the product by varying the angle of the centre line 18 (see Figure 3) of the trimmer with respect to the ground level, which is indicated by the reference numeral 19. This allows the trimmer to be used by operators of differing heights without requiring any physical adjustments of the trimmer itself.

An important feature of the trimmer is that, as shown in Figure 3, the centre line 18 of the trimmer passes substantially through the intersection of the support surface in the edging mode (that is to say the surface - indicated by the plane S - of contact between the roller 12a and the ground 19 in the edging mode) and the plane C of rotation of the cutter line. This ensures that, in either mode, the operator's hands are at substantially the same, comfortable height. This is to be contrasted with known trimmers that require the operator to lift his/her hands when edging.

The centre line 20 of the main handle 14 is offset by 0.4° with respect to the centre line 18 of the trimmer. This offset leads to an ergonomic improvement, in that it facilitates the use of the trimmer by operators of different heights. Moreover, the axis 21 of the motor makes an angle of 48.8° with the centre line 18 of the trimmer, and an angle of 48.4° with the centre line 20 of the main handle 14. Thus, when the trimmer mode is changed from trimming to edging, the user will need to increase the angle the trimmer centre line 18 makes with the ground level 19 to ensure that the cutter line is in a generally vertical plane. In this way, the handles 14 and 17 are raised in the edging position, so that the trimmer can be operated in both operating positions with greater comfort than is the case with known trimmers.

A motor switch (not shown) is housed within the upper portion of the main handle 14, the switch being operable by means of a trigger 22 having first and second hand-engageable switch actuation portions 22a and 22b and a central portion (not shown) located within a central, hollow arcuate extension 14a of the main handle. This form of trigger 22 is advantageous in that the actuation portion 22a is uppermost in the trimming position shown in Figure 3, and the actuation portion 22b is uppermost in the edging position shown in Figure 4. Thus, the motor switch can easily be operated, in either the trimming position or the edging position by the user gripping the main handle 14 with a hand in its natural position for manoeuvring the trimmer, that is to say with the hand gripping the main handle in the uppermost region.

The trimmer described above has the advantage of it being easy to move from one operating position to the other, it being relatively simple to effect this change of mode by holding the steady handle 17 with one hand and twisting the main handle 14 with the other hand. Moreover, as the trimmer is moved from one operating position to the other, the user can move his upper hand to the upper portion of the main handle 14 and operate the switch using whichever of the actuation portions 22a and 22b is uppermost. The user does not, therefore, have to move his upper hand to the lower portion of the main handle 14 to operate the motor switch, and then move that hand back to the upper portion of the main handle to facilitate manoeuvring of the trimmer.

It will be apparent that modifications could be made to the trimmer described above. In particular, the 0.4° angle between the centre lines 18 and 20 is not critical, and could be larger than this. This angle could also be zero. Similarly, the angle between the motor axis 21 and the centre line 18 of the trimmer could be varied, but preferably this lies within the range of from 35° to 55°.

In a particularly advantageous modified embodiment, the sleeve 16 and the journal 15 are provided with interengageable detent and socket means for retaining the handles 14 and 17 in the trimming and edging positions. The interengagement of these means can easily be overcome by relative rotation of the handles 14 and 17.

It would also be possible to provide an alternative form of rotatable joint between the main handle 14 and the steady handle 17. For example, the journal 15 could form part of the connecting member 13, and the steady handle 17 could be provided with a pivot pin having opposite ends located within apertures formed in a pair of lugs fixed to the connecting member. In this case, the axis of rotation between the two handles 14 and 17 would be parallel to, and off-set from, the centre line 18 of the trimmer. It would also be possible to provide a rotational joint constituted by fixing the journal 15 to the main handle 14, fixing the steady handle 17 to the connecting member 13, and rotatably mounting the journal in the free end of the connecting member.

In another modification, the main handle 14, the sleeve 16 and the connecting member 13 could be integrally formed, and the handle 17 could be pivotally attached to the sleeve 16, for rotation about an axis at right-angles to the centre line 18 of the trimmer. In this case, in order to move from one operating position to the other, the handle 17 would be rotated through 180°, followed by rotation of the entire trimmer through 180°, thereby restoring the relative positions of the two handles 14 and 17 whilst rotating the cutter head 11 to the other operating position.

## Claims

1. A vegetation trimmer comprising a cutter head housing a cutter means, and first and second handles, the first handle being fixed to the cutter head by means of a connecting member, and the second handle being rotatably mounted with respect to the first handle, whereby the cutter head is movable between a first operating position (trimming mode) in which the cutter means is substantially horizontal and a second operating position (edging mode) in which the cutter means is substantially vertical.

2. A trimmer as claimed in claim 1, wherein the cutter head defines a support surface on which the trimmer is supported in the edging mode, and the axis of rotation between the first and second handles substantially passes through the intersection of said surface and the plane of action of the cutter means.

3. A trimmer as claimed in claim 2, further comprising a roller fixed to the cutter head for rotatably supporting the cutter head when the trimmer is in the edging mode, that surface of the roller contacting the ground during edging constituting the support surface.

4. A trimmer as claimed in any one of claims 1 to 3, further comprising retaining means for retaining the first and second handles in the relative configurations corresponding to the first and second operating positions.

5. A trimmer as claimed in any one of claims 1 to 4, wherein the connecting member is fixed to the first handle by means of a journal, and the second handle is fixed to a bearing sleeve which surrounds the journal for rotation relative thereto.

6. A trimmer as claimed in claim 5, wherein the journal is substantially cylindrical, and the bearing sleeve is a substantially hollow cylindrical bearing sleeve.

7. A trimmer as claimed in either of claims 5 and 6 when appendant to claim 4, wherein the retaining means comprises interengageable detent and socket means on the journal and the bearing sleeve.

8. A trimmer as claimed in any one of claims 1 to 7, wherein the cutter head further comprises a motor housing integrally formed therewith, wherein a motor is mounted within the motor housing, the motor being in drivable engagement with the cutter means, and wherein the motor housing adjoins the connecting member.

9. A trimmer as claimed in claim 8, wherein the cutter means is rotatable relative to the cutter head, and the motor is in rotatable drivable engagement with the cutter means.

10. A trimmer as claimed in claim 8 or claim 9, wherein the cutter head, the motor housing, the connecting member, the journal and the first handle are of clam shell construction.

11. A trimmer as claimed in claim 10, wherein the cutter head, the motor housing, the connecting member, the journal and the first handle are made of a plastics material.

12. A trimmer as claimed in claim 11, wherein the plastics material is ABS or polypropylene.

13. A trimmer as claimed in any one of claims 8 to 12, wherein the axis of the motor lies at a predetermined angle to the centre line of the trimmer.

14. A trimmer as claimed in claim 13, wherein said predetermined angle lies in the range of from substantially 35° to 55°.

15. A trimmer as claimed in claim 14, wherein said predetermined angle is substantially 48.8°.

16. A trimmer as claimed in any one of claims 8 to 15, wherein the motor is an electric motor, and a switch for actuating the motor is provided within the first handle.

17. A trimmer as claimed in claim 16, further comprising trigger means for actuating the motor switch, the trigger means having first and second hand-engageable switch actuation portions.

18. A trimmer as claimed in claim 17, wherein the trigger means is constituted by an elongate lever, the first and second actuation portions being positioned at opposite end portions of the lever.

19. A trimmer as claimed in claim 17 or claim 18, wherein the first handle has a generally D-shaped, hand-engageable portion, the motor switch is mounted within the curved part of the D-shaped portion, and the trigger means is positioned to extend along the interior of the curved part of the D-shaped portion.

20. A trimmer as claimed in any one of claims 1 to 19, wherein the centre line of the first handle lies at a predetermined angle to the centre line of the trimmer.

21. A trimmer as claimed in claim 20, wherein said predetermined angle is 0.4°.
